# FASCICULE DE BREVET EUROPEEN

(11) **EP 2 362 111 B1**
(45) Date de publication et mention de la délivrance du brevet: **05.08.2020**
(21) Numéro de dépôt: 11154219.7
(22) Date de dépôt: 11.02.2011
(51) Int. Cl.: F16D 65/12, F16D 69/00

(54) **GARNITURE DE FRICTION ANNULAIRE POUR EMBRAYAGE À SEC**
REIBBELAG FÜR EINE TROCKENKUPPLUNGSSCHEIBE
ANNULAR FRICTION LINING FOR A DRY CLUTCH

(30) Priorité: 22.02.2010 FR 1051237
(43) Date de publication de la demande: 31.08.2011
(73) Titulaire: Valeo Matériaux de Friction, 87000 Limoges (FR)
(72) Inventeur: Adamczak, Loïc, 81740, Roussac (FR); Alix, Isabelle, 87290, Chateauponsac (FR); Biot, Christian, 87410, Le Palais sur Vienne (FR); Boutaud, Jean-Pierre, 87350, Panazol (FR); Perret, Philippe, 87000, Limoges (FR)
(74) Mandataire: Vincent, Catherine Marie Marguerite

(56) Documents cités:
- DE-A1- 19 626 688
- DE-A1-102005 025 546
- US-A- 3 073 424
- US-A- 5 819 888

## Description

La présente invention concerne une garniture de friction annulaire pour embrayage à sec, notamment pour véhicule automobile.

Un embrayage de véhicule automobile fonctionnant à sec comprend, d'une manière générale, un disque de friction portant sur chacune de ses faces des garnitures de friction fixées à un support éventuellement commun, le support étant fixé à un moyeu cannelé en prise avec un arbre d'entrée d'une boîte de vitesses. Un amortisseur de torsion est, en général, intercalé entre le ou les supports des garnitures de friction et le moyeu cannelé. En outre, un dispositif de progressivité est classiquement placé entre les deux garnitures de friction.

Le disque de friction est, en service, placé entre, d'une part, un plateau de réaction relié directement ou indirectement au vilebrequin du moteur du véhicule et, d'autre part, un plateau de pression d'un mécanisme d'embrayage comportant un couvercle relié au plateau de réaction et un moyeu d'embrayage, tel par exemple qu'un diaphragme annulaire, sollicitant axialement le plateau de pression qui est relié en rotation au couvercle tout en pouvant se déplacer axialement par rapport à celui-ci de manière limitée.

En position embrayée, les garnitures du disque de friction sont serrées entre le plateau de réaction et le plateau de pression, de sorte que le couple de rotation du moteur thermique est transmis à l'arbre d'entrée de boîte de vitesses.

Il est connu de ménager des rainures radiales ou obliques dans les garnitures de friction, afin d'éliminer d'éventuelles pollutions (graisses, huiles) qui pourraient se retrouver sur les surfaces de friction, comme cela est décrit dans le document GB 319 852.

De telles rainures aident également à chasser tous les débris d'usure, spécialement pendant le rodage, permettant ainsi d'éviter les grippages. Ces rainures apportent également une souplesse au disque d'embrayage auquel la garniture est fixée, améliorant ainsi le rattrapage des jeux et réduisant au minimum les vibrations et les bruits d'embrayage. Ces rainures fragilisent toutefois les garnitures de friction et réduisent leur résistance à l'éclatement.

En outre, de telles rainures n'améliorent pas les performances de l'embrayage face au phénomène dit de « fading » ou d'évanouissement. Lors d'un frottement prolongé des surfaces, les garnitures sont soumises à un échauffement important qui a pour effet de diminuer sensiblement leur coefficient de frottement. Ceci est provoqué par une détérioration des couches superficielles des garnitures, agissant alors comme un lubrifiant entre les couches saines de la garniture et la surface opposée de frottement du contre-matériau. Cette détérioration est directement liée à l'énergie dissipée lors du frottement et à la qualité du refroidissement des garnitures.

Le document FR 966 920 divulgue une garniture de friction visant à limiter cette diminution du coefficient de frottement. Pour cela, il est proposé de ménager un réseau de rainures dans la garniture. Plusieurs variantes sont décrites dans ce document, mais aucune ne permet d'obtenir à la fois une résistance mécanique suffisante et un coefficient de frottement élevé.

Le document DE 10 2005 025546 décrit une garniture de friction pour un embrayage électromagnétique comportant une face de friction dans laquelle sont ménagées des premières rainures s'étendant entre les bords radialement interne et externe de la face de friction et des rainures annulaires coupant les premières rainures, les rainures délimitant entre elles des plots. Toutefois, ce document vise plus particulièrement le domaine des embrayages électromagnétique et ne permet pas en outre d'obtenir à la fois une résistance mécanique suffisante et un coefficient de frottement élevé.

L'invention a notamment pour but d'apporter une solution simple, efficace et économique à ce problème.

A cet effet, elle propose une garniture de friction annulaire pour embrayage à sec, comportant des bords radialement interne et externe et une face de friction dans laquelle sont ménagées des premières rainures s'étendant du bord radialement interne au bord radialement externe, la face de friction comportant en outre au moins une seconde rainure annulaire coupant les premières rainures, les première et seconde rainures délimitant entres elles des plots et présentant des surfaces de fond ainsi que des surfaces latérales, ladite garniture présentant un rapport entre la somme des surfaces internes des rainures (somme des surfaces de fond et des surfaces latérales) et la somme des surfaces de friction des plots compris entre 0,5 et 1, la somme des surfaces internes des première et seconde rainures étant égale à la somme des surfaces de fond et des surfaces latérales desdites premières et seconde rainures.

Un tel ratio permet de refroidir suffisamment les plots de friction, de manière à limiter le phénomène de « fading » et, ainsi, obtenir un coefficient de friction suffisamment élevé. D'autre part, ce ratio permet de conserver une surface de frottement importante, égale à la somme des surfaces de friction des plots.

Selon une caractéristique de l'invention, ledit rapport est compris entre 0,65 et 0,9, et est préférentiellement de l'ordre de 0,7.

Les meilleures performances sont obtenues pour un rapport de l'ordre de 0.7.

Avantageusement, la face de friction comporte entre 12 et 100 premières rainures en fonction de la taille de la garniture.

Selon une possibilité de l'invention, la face de friction comporte trois secondes rainures annulaires.

De manière préférée, les rainures annulaires sont circulaires et légèrement excentrées par rapport aux bords interne et externe de la garniture, soit sous forme de cercle complet, soit sous forme de deux demi cercles. En variante les rainures annulaires sont elliptiques et centrées. Le refroidissement des plots de friction est ainsi assuré de manière homogène.

Selon une autre caractéristique de l'invention, les premières rainures sont rectilignes et inclinées d'un angle de 15° par rapport à un rayon.

Avantageusement, la profondeur des rainures est comprise entre 25 et 100 % de l'épaisseur de la garniture de friction.

La garniture de friction peut présenter une épaisseur de l'ordre de 2 mm.

Préférentiellement, la garniture de friction est collée ou surmoulée sur un clinquant.

L'invention concerne en outre l'utilisation d'une garniture de friction selon l'invention dans un embrayage à sec pour véhicule automobile.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'une garniture de friction selon l'invention,
- la figure 2 est une vue de détail de la garniture de friction de la figure 1,
- la figure 3 est une vue de dessus de la garniture de friction de la figure 1,
- les figures 4 à 6 sont des vues correspondant à la figure 3, illustrant chacune une variante de réalisation de l'invention,
- la figure 7 est un diagramme illustrant la variation du coefficient de friction à l'interface entre les surfaces de friction de la garniture et le contre-matériau correspondant en fonction du rapport entre la somme des surfaces internes des rainures (somme des surfaces de fond et des surfaces latérales) et la somme des surfaces de friction des plots,
- la figure 8 est un diagramme illustrant l'usure des surfaces de friction de la garniture en fonction du rapport précité.

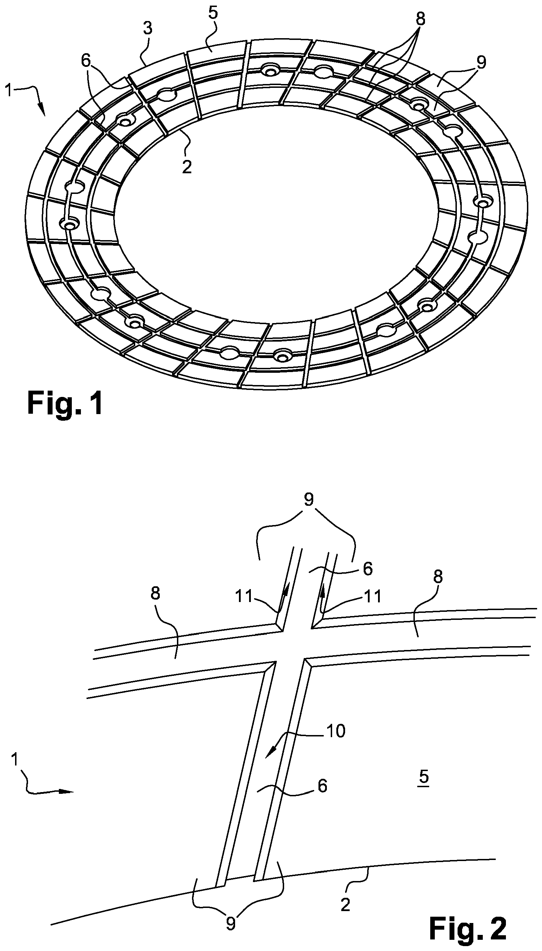

Les figures 1 à 3 représentent une garniture de friction annulaire 1 pour embrayage à sec selon une première forme de réalisation. La garniture comporte des bords radialement interne et externe 2, 3, une face liée à un cliquant, et une face de friction opposée 5.

Des premières rainures 6 sont ménagées dans la face de friction 5 et s'étendent de manière rectiligne du bord radialement interne 2 au bord radialement externe 3.

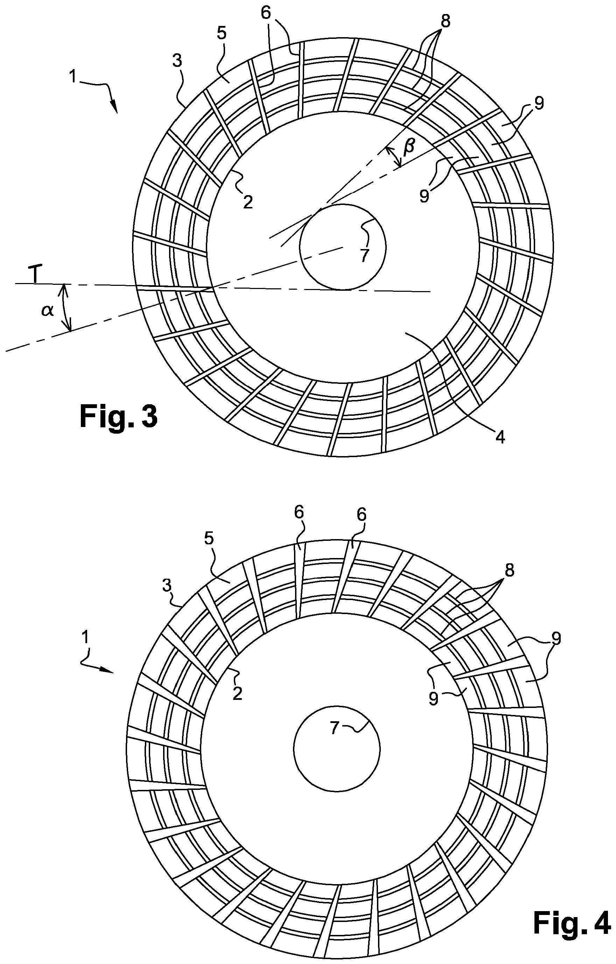

Chaque rainure 6 s'étend suivant la tangente T au bord périphérique interne 7 du disque 4 qui porte la garniture (figure 3). Chaque rainure 6 forme ainsi un angle α par rapport à la direction radiale, deux rainures consécutives formant entre elles un angle β.

La surface de friction 5 comporte en outre trois secondes rainures annulaires 8 de forme circulaire et coupant les premières rainures 6.

Les rainures 6, 8 sont régulièrement espacées les unes des autres et délimitent entre elles des plots 9.

Chaque rainure 6, 8 présente une surface de fond 10 et des surfaces latérales 11 (figure 2).

On définira ci-après par R le rapport entre la somme des surfaces internes des rainures 6, 8 (somme des surfaces de fond 10 et des surfaces latérales 11) et la somme des surfaces de friction des plots 9.

Selon l'invention ce rapport R est compris entre 0,5 et 1, plus particulièrement compris entre 0,65 et 0,9, et est préférentiellement de l'ordre de 0,7.

Le nombre de premières rainures 6 est égal à 12 dans le cas des figures 1 à 3 mais peut varier entre 12 et 100.

L'épaisseur de la garniture 1 est de l'ordre de 2 mm, pouvant varier de 1,5 mm à 4 mm, la profondeur des rainures 6, 8 pouvant varier entre 25 % et 100 % de l'épaisseur de la garniture 2, en fonction notamment du rapport R à obtenir.

Les rainures 6, 8 peuvent ainsi traverser entièrement le matériau de la garniture 1 dans le cas d'une garniture collée ou surmoulée sur un clinquent jusqu'à déboucher sur le clinquant, les plots 9 étant alors maintenus uniquement sur le clinquant.

Une deuxième forme de réalisation est illustrée à la figure 4. Dans celle-ci, la section des premières rainures 6 augmente du bord périphérique interne 2 vers le bord périphérique externe 3 de la garniture 1, de manière à faciliter la circulation d'air de refroidissement.

L'augmentation de la section est obtenue par un écartement progressif des surfaces latérales 11 des rainures 6, 8. Elle pourrait éventuellement être accompagnée d'augmentation progressive de la profondeur des rainures.

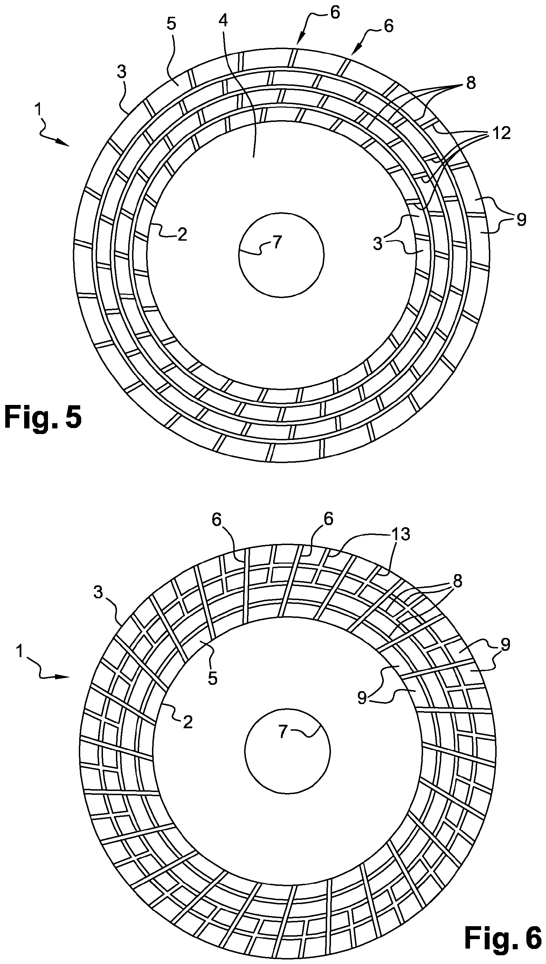

Une troisième forme de réalisation est représentée à la figure 5. Dans celle-ci, chaque première rainure 6 comporte plusieurs segments 12 décalés angulairement en quinconce et s'étendant successivement du bord périphérique interne 2 à la rainure annulaire 8 la plus interne, puis d'une rainure annulaire 8 à l'autre, puis enfin de la rainure annulaire 8 la plus externe au bord périphérique externe 3. Deux segments successifs 12 sont reliés entre eux par une portion de rainure circulaire se confondant avec l'une des secondes rainures 8. On remarquera que les premières rainures 6 s'étendent toujours du bord périphérique interne 2 au bord périphérique externe 3, même si elles se confondent, en partie, avec les secondes rainures 8.

Une quatrième forme de réalisation est illustrée à la figure 6. Celle-ci diffère de la forme de réalisation de la figure 3 en ce que des troisièmes rainures 13 s'étendent de l'une des secondes rainures 8 au bord périphérique externe 3. Chaque troisième rainure 13 est disposée entre deux premières rainures 6 et s'étend de manière rectiligne, suivant une tangente au bord périphérique interne 7 du disque 4.

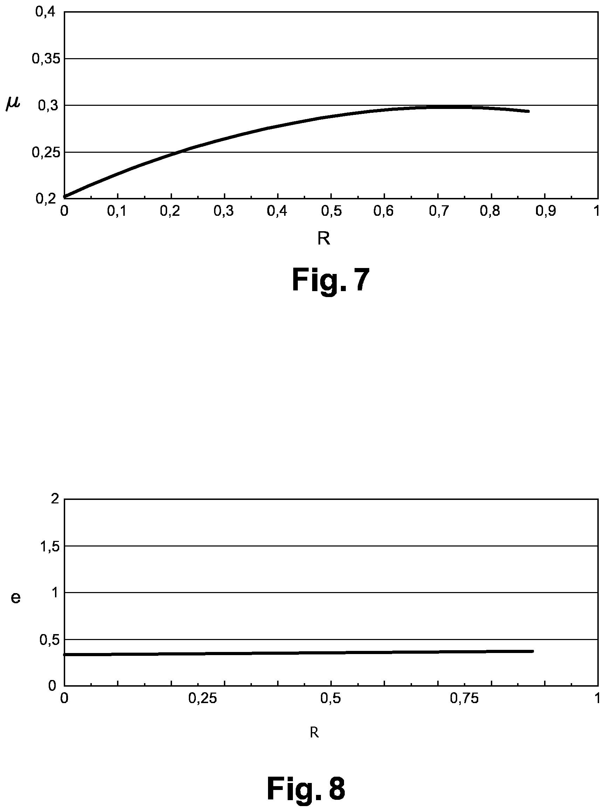

La figure 7 illustre la variation du coefficient de friction entre les surfaces de friction des plots 9 et le contre-matériau correspondant en fonction du rapport R lors d'essais représentant des cycles à forte sollicitation thermique de la garniture comme des démarrages en côte d'un véhicule pleine charge avec une remorque.

On remarque que le coefficient de friction augmente notablement quand le rapport R passe de 0 à 0,5, puis atteint un palier entre 0,6 et 0,9 environ. Une valeur maximale est atteinte pour un rapport R de l'ordre de 0,7. Ceci montre que la garniture de friction selon l'invention permet de limiter le phénomène dit de « fading » précité, en augmentant le refroidissement des zones de frottement, sans provoquer d'usure prématurée de la garniture, comme cela apparaît sur la figure 8, qui illustre l'usure des surfaces de friction de la garniture en mm en fonction du rapport précité lors d'essais à forte sollicitation thermique de la garniture. On remarque que l'influence du rapport R est quasiment nulle sur l'usure de la garniture quand R varie de 0 à 0,9 environ.

## Revendications

1. Garniture de friction annulaire (1) pour embrayage à sec comportant des bords radialement interne et externe (2, 3) et une face de friction (5) dans laquelle sont ménagées des premières rainures (6) s'étendant du bord radialement interne (2) au bord radialement externe (3), la face de friction (5) comportant en outre au moins une seconde rainure annulaire (8) coupant les premières rainures (6), les première et seconde rainures (6, 8) délimitant entres elles des plots (9) et présentant des surfaces de fond (10) ainsi que des surfaces latérales (11), ladite garniture étant **caractérisée en ce que** le rapport entre la somme des surfaces internes des première et seconde rainures et la somme des surfaces de friction des plots (9) est compris entre 0,5 et 1, la somme des surfaces internes des première et seconde rainures (6, 8) étant égale à la somme des surfaces de fond (10) et des surfaces latérales (11) desdites premières et seconde rainures (6, 8).

2. Garniture de friction (1) selon la revendication 1, **caractérisée en ce que** ledit rapport est compris entre 0,65 et 0,9, et est préférentiellement de l'ordre de 0,7.

3. Garniture de friction (1) selon la revendication 1 ou 2, **caractérisée en ce que** la face de friction (5) comporte au moins 12 premières rainures (6).

4. Garniture de friction (1) selon la revendication 1 à 3, **caractérisée en ce que** la face de friction (5) comporte au moins deux secondes rainures annulaires (8).

5. Garniture de friction (1) selon la revendication 4, **caractérisée en ce que** les rainures annulaires (8) sont circulaires et excentrées entre les bords interne et externe (2, 3) de la garniture (1) ou sont elliptiques et centrées.

6. Garniture de friction (1) selon l'une des revendications 1 à 5, **caractérisée en ce que** les premières rainures (6) sont rectilignes et inclinées par rapport à un rayon.

7. Garniture de friction (1) selon l'une des revendications 1 à 6, **caractérisée en ce que** la profondeur des rainures (6, 8) est comprise entre 25 et 100 % de l'épaisseur de la garniture de friction (1).

8. Garniture de friction (1) selon l'une des revendications 1 à 7, **caractérisée en ce qu'**elle a une épaisseur de l'ordre de 1,5 mm à 4 mm.

9. Garniture de friction (1) selon l'une des revendications 1 à 8, **caractérisée en ce qu'**elle est collée sur un clinquant (4).

10. Utilisation d'une garniture de friction (1) selon l'une des revendications 1 à 9, dans un embrayage à sec pour véhicule automobile.

## Patentansprüche

1. Ringförmiger Reibbelag (1) für eine Trockenkupplung, der radial innere und äußere Ränder (2, 3) und eine Reibseite (5) aufweist, in der erste Rillen (6) ausgespart sind, die sich vom radial inneren Rand (2) bis zum radial äußeren Rand (3) erstrecken, wobei die Reibseite (5) außerdem mindestens eine zweite ringförmige Rille (8) aufweist, die die ersten Rillen (6) schneidet, wobei die ersten und zweiten Rillen (6, 8) zwischen sich Blöcke (9) begrenzen und Bodenflächen (10) sowie Seitenflächen (11) aufweisen, wobei der Belag **dadurch gekennzeichnet ist, dass** das Verhältnis zwischen der Summe der Innenflächen der ersten und zweiten Rillen und der Summe der Reibflächen der Blöcke (9) zwischen 0,5 und 1 liegt, wobei die Summe der Innenflächen der ersten und zweiten Rillen (6, 8) gleich der Summe der Bodenflächen (10) und der Seitenflächen (11) der ersten und zweiten Rillen (6, 8) ist.

2. Reibbelag (1) nach Anspruch 1, **dadurch gekennzeichnet, dass** das Verhältnis zwischen 0,65 und 0,9 liegt und vorzugsweise in der Größenordnung von 0,7 ist.

3. Reibbelag (1) nach Anspruch 1 oder 2, **dadurch gekennzeichnet, dass** die Reibseite (5) mindestens 12 erste Rillen (6) aufweist.

4. Reibbelag (1) nach Anspruch 1 bis 3, **dadurch gekennzeichnet, dass** die Reibseite (5) mindestens zwei zweite ringförmige Rillen (8) aufweist.

5. Reibbelag (1) nach Anspruch 4, **dadurch gekennzeichnet, dass** die ringförmigen Rillen (8) kreisförmig und außermittig zwischen den Innen- und Außenrändern (2, 3) des Belags (1) oder elliptisch und zentriert sind.

6. Reibbelag (1) nach einem der Ansprüche 1 bis 5, **dadurch gekennzeichnet, dass** die ersten Rillen (6) geradlinig und bezüglich eines Radius geneigt sind.

7. Reibbelag (1) nach einem der Ansprüche 1 bis 6, **dadurch gekennzeichnet, dass** die Tiefe der Rillen (6, 8) zwischen 25 und 100% der Dicke des Reibbelags (1) liegt.

8. Reibbelag (1) nach einem der Ansprüche 1 bis 7, **dadurch gekennzeichnet, dass** er eine Dicke in der Größenordnung von 1,5 mm bis 4 mm hat.

9. Reibbelag (1) nach einem der Ansprüche 1 bis 8, **dadurch gekennzeichnet, dass** er auf eine Metallfolie (4) geklebt ist.

10. Verwendung eines Reibbelags (1) nach einem der Ansprüche 1 bis 9 in einer Trockenkupplung für ein Kraftfahrzeug.

## Claims

1. Annular friction lining (1) for a dry clutch, comprising radially inner and outer edges (2, 3) and a friction face (5) in which there are created first grooves (6) extending from the radially inner edge (2) to the radially outer edge (3), the friction face (5) further comprising at least one second, annular groove (8) intersecting the first grooves (6), the first and second grooves (6, 8) delimiting blocks (9) between them and having bottom surfaces (10) and lateral surfaces (11), said lining being **characterized in that** the ratio between the sum of the inner surfaces of the first and second grooves and the sum of the friction surfaces of the blocks (9) is between 0.5 and 1, the sum of the inner surfaces of the first and second grooves (6, 8) being equal to the sum of the bottom surfaces (10) and lateral surfaces (11) of the said first and second grooves (6, 8).

2. Friction lining (1) according to Claim 1, **characterized in that** the said ratio is between 0.65 and 0.9, and is preferably of the order of 0.7.

3. Friction lining (1) according to Claim 1 or 2, **characterized in that** the friction face (5) comprises at least 12 first grooves (6).

4. Friction lining (1) according to Claims 1 to 3, **characterized in that** the friction face (5) comprises at least two second, annular grooves (8).

5. Friction lining (1) according to Claim 4, **characterized in that** the annular grooves (8) are circular and off-centre between the inner edge and outer edge (2, 3) of the lining (1), or are elliptical and centred.

6. Friction lining (1) according to one of Claims 1 to 5, **characterized in that** the first grooves (6) are straight and at an angle to a radius.

7. Friction lining (1) according to one of Claims 1 to 6, **characterized in that** the depth of the grooves (6, 8) is between 25 and 100% of the thickness of the friction lining (1).

8. Friction lining (1) according to one of Claims 1 to 7, **characterized in that** it has a thickness of the order of 1.5 mm to 4 mm.

9. Friction lining (1) according to one of Claims 1 to 8, **characterized in that** it is adhesively bonded to a foil (4).

10. Use of a friction lining (1) according to one of Claims 1 to 9, in a dry clutch for a motor vehicle.
